# EUROPEAN PATENT SPECIFICATION

(11) **EP 0 512 645 B1**
(45) Date of publication and mention of the grant of the patent: **19.04.1995**
(21) Application number: 92201272.9
(22) Date of filing: 06.05.1992
(51) Int. Cl.: B65G 17/26, B65B 43/54

(54) **Conveyor for transporting containers**
Förderer zum Transportieren von Behältern
Convoyeur pour le transport de conteneurs

(30) Priority: 08.05.1991 JP 102811/91
(43) Date of publication of application: 11.11.1992
(73) Proprietor: Shikoku Kakoki Co., Ltd., Itano-gun, Tokushima, 771-02 (JP)
(72) Inventor: Ueda, Michio, c/o Shikoku Kakoki Co., Ltd., Itano-gun, Tokushima 771-02 (JP); Iuchi, Tetsuya, c/o Shikoku Kakoki Co., Ltd., Itano-gun, Tokushima 771-02 (JP); Miki, Takao, c/o Shikoku Kakoki Co., Ltd., Itano-gun, Tokushima 771-02 (JP); Hamada, Hisanori, c/o Shikoku Kakoki Co., Ltd., Itano-gun, Tokushima 771-02 (JP)
(74) Representative: Vollebregt, Cornelis Jacobus, Ir.

(56) References cited:
- EP-A- 0 286 514
- DE-A- 2 610 904

## Description

The present invention relates to container transport conveyors for use in packaging machines for filling cup-shaped containers with dessert foods such as custard puddings, jellys, yogurts or ice creams.

Such conveyors heretofore known comprise a plurality of holder plates connected between a pair of endless belts and formed with container holding apertures.

The container holding apertures are formed in the holder plates in conformity with the size and shape of the containers to be transported by the conveyor. Accordingly, when containers which are different in size or shape from those previously handled are to be transported by the conveyor, the holder plates need to be replaced by those formed with holding apertures in conformity with the containers to be transported, hence a cumbersome procedure.

The main object of the present invention is to provide a container transport conveyor which is adapted to transport different kinds of containers having varying sizes or shapes without the necessity of changing the holder plates.

The present invention provides a conveyor for transporting different kinds of containers varying, for example, in size, the conveyor comprising different kinds of container holders corresponding to the different kinds of containers, and means for moving the holders along a predetermined path intermittently by a specified pitch at a time, all the holders being divided into groups each comprising the combination of the different kinds of holders each one in number, the groups being arranged in succession along the path and being identical in the order of the kinds of holders in the group, the spacing between the holders of the same kind in the groups adjacent to each other being equal to the pitch the holders are moved at a time.

According to the present invention, the holders for the containers to be transported are selected from among the different kinds of holders for the selected holders to transport the desired containers, so that different kinds of containers, varying in size or shape, can be transported without changing the holder plates.

The invention will be further explained hereafter with reference to the accompanying figures.
FIG. 1 is a fragmentary perspective view of a container transport conveyor embodying the invention; and
FIG. 2 includes diagrams illustrating examples of different combinations of holder slats.

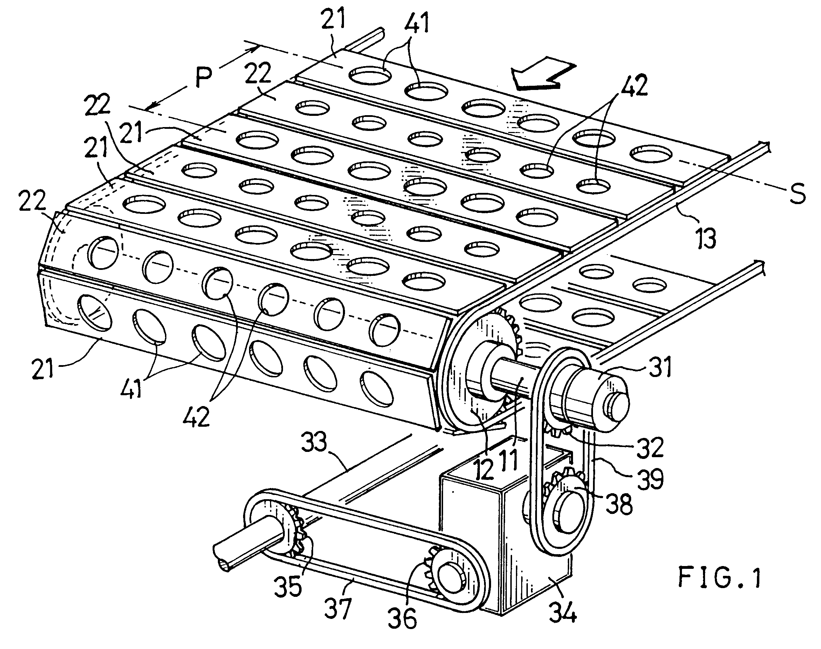

In the following description, the terms "front" and "rear" are used with respect to the direction of travel of the slats of the conveyor described; the direction in which the slats advance (as indicated by an arrow in FIG. 1) is referred to as "front," and the opposite direction as "rear." The terms "right" and "left" are used for the conveyor as it is seen from the front rearward.

The illustrated container transport conveyor comprises a pair of right and left drive sprockets 12 spaced apart by a predetermined distance and fixed to a drive shaft 11, a pair of right and left endless chains 13 reeved around the respective sprockets, and two kinds of slats, i.e., first and second slats 21, 22, connected between the chains and arranged alternately in succession.

A power transmission sprocket 32 is coupled to the right end of the drive shaft 11 via a clutch 31. A horizontal main shaft 33 extends below the lower-side path of travel of the slats in parallel thereto. An index box 34 is disposed below the starting end of the path. A pair of main drive sprockets 35, 36 are mounted respectively on the main shaft 33 and an output shaft of the index box 34 and have a chain 37 reeved therearound. The index box 34 has an output shaft carrying a driven sprocket 38 thereon. A chain 39 is reeved around the driven sprocket 38 and the power transmission sprocket 32.

The first and second slats 21, 22 are formed with container holding apertures 41, 42, respectively, the apertures in each slat being six in number and arranged in a row longitudinally thereof. While the apertures 41, 42 of the slats 21, 22 are circular, the apertures 41 of the first slats 21 are larger than the apertures 42 of the second slats 22 in diameter.

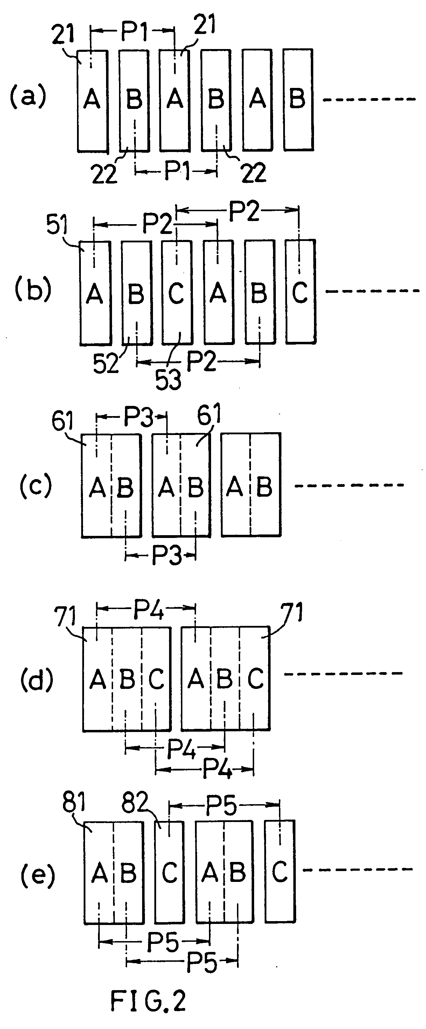

When the main shaft 33 is driven through 360 degrees for one turn by the main motor of an unillustrated filling machine, both the slats 21, 22 are transported by one pitch P. The term "one pitch P" refers to the distance P1 between the centers of two first slats 21 at the front and rear sides of each second slat 22 (see FIG. 2).

Now, suppose the first slats 21 are in use. The first slats 21 then come to a stop one after another at a predetermined processing station S, such as a filling station, capping station or the like.

When the second slats 22 are to be used instead of the first slats 21, both the slats 21, 22 need to be shifted by one-half of a pitch so as to stop the second slats 22 at the processing station S. This can be accomplished by driving the main shaft 33 at a very low speed, holding the drive shaft 11 out of rotation with the clutch 31 disengaged while the main shaft 33 rotates through an angle corresponding to one-half of a pitch, e.g., through 90 degrees, during its rotation through 360 degrees, and thereafter driving the drive shaft 11 with the clutch 31 engaged.

Exemplary combinations of slats will be described next with reference to FIG. 2.

FIG. 2, (a) is a diagram showing the foregoing combination of first and second slats 21, 22. FIG. 2, (b) shows three kinds of slats 51, 52, 53 in combination. FIG. 2, (c) shows two kinds of slats 61 which are divided into groups each comprising two different slats 61 which are made integral. FIG. 2, (d) shows three kinds of slats 71 divided into groups each comprising three different slats 71 which are made integral. FIG. 2, (e) shows two different slats 81 which are integral, in combination with another kind of slat 82. In FIG. 2, (a) to (e), the respective pitches are indicated at P1 to P5.

Combinations other than those given above are also useful. For example, at least four kinds of container holding apertures are of course usable.

The conveyor, which is driven by the main motor, may alternatively be driven by a pulse motor, servomotor or the like specific thereto. The procedure for shifting the slats for the use of slats of different kind can then be omitted.

## Claims

1. A conveyor for transporting different kinds of containers varying in size or the like, the conveyor comprising different kinds of container holders corresponding to the different kinds of containers, and means for moving the holders along a predetermined path intermittently by a specified pitch at a time, all the holders being divided into groups each comprising the combination of the different kinds of holders each one in number, the groups being arranged in succession along the path and being identical in the order of the kinds of holders in the group, the spacing between the holders of the same kind in the groups adjacent to each other being equal to the pitch the holders are moved at a time.

2. A conveyor as defined in claim 1 wherein each of the holders comprises a slat having container holding apertures and connected between a pair of endless chains.

3. A conveyor as defined in claim 2 wherein the slats of different kinds of holders are separate from one another.

4. A conveyor as defined in claim 2 wherein the slats of different kinds of holders in each group are integral.

5. A conveyor as defined in claim 2 wherein the holders are at least three in the number of kinds thereof, and at least two kinds of slats among the slats of different kinds of holders in each group are integral.

6. A conveyor as defined in claim 2 wherein the chains are reeved around respective sprockets fixed to a drive shaft, and the drive shaft is driven by a drive source via a clutch.

## Patentansprüche

1. Ein Förderer zum Transport verschiedener Arten von Behältern, die in der Größe oder dergleichen variieren, wobei der Förderer verschiedene Arten von Behälterhaltern aufweist, die mit den verschiedenen Arten der Behälter korrespondieren, und eine Einrichtung zur intermittierenden Bewegung der Halter entlang eines vorbestimmten Weges über jeweils eine spezifische Wegstrecke, wobei sämtliche Halter in Gruppen aufgeteilt sind, von denen jede die Kombination verschiedener Arten von Haltern und von jeder Art nur einen enthält, wobei die Gruppen entlang des Weges aufeinanderfolgend angeordnet sind und identisch in der Reihenfolge der Arten der Halter innerhalb der Gruppen sind, wobei der Abstand zwischen den Haltern derselben Art in den einander benachbarten Gruppen gleich ist der Wegstrecke, über den die Halter jeweils bewegt werden.

2. Ein Förderer wie in Anspruch 1 definiert,
bei dem jeder der Halter eine Schiene aufweist, die Behälterhalteröffnungen hat und zwischen einem Paar von Endlosketten verbunden ist.

3. Ein Förderer wie in Anspruch 2 definiert,
bei dem die Schienen mit verschiedenen Arten von Haltern getrennt voneinander sind.

4. Ein Förderer wie in Anspruch 2 definiert,
bei dem die Schienen mit verschiedenen Arten von Haltern in jeder Gruppe eine Einheit bilden.

5. Ein Förderer wie in Anspruch 2 definiert,
bei dem zumindest drei Halter in der Anzahl ihrer Arten vorhanden sind und zumindest zwei Arten von Schienen unter den Schienen verschiedener Arten von Haltern in jeder Gruppe eine Einheit bilden.

6. Ein Förderer wie in Anspruch 2 definiert,
bei dem die Ketten um jeweilige Kettenräder herumgeführt sind, die an einer Antriebswelle befestigt sind, und bei dem die Antriebswelle durch eine Antriebsquelle über eine Kupplung angetrieben ist.

## Revendications

1. Convoyeur pour transporter différents types de récipients variables en taille, ou autre, le convoyeur comprenant différents types de porte-récipients correspondant aux différents types de récipients, et des moyens pour déplacer d'une manière intermittente, d'un pas spécifié à la fois, les porte-récipients le long d'une trajectoire prédéterminée, tous les porte-récipients étant divisés en groupes comprenant chacun la combinaison des différents types de porte-récipients respectivement prévus en nombre d'une, les groupes étant disposés les uns à la suite des autres le long de la trajectoire et identiques quant à l'ordre des types de porte-récipients dans le groupe, l'écartement entre les porte-récipients du même type dans les groupes adjacents les uns aux autres étant égal au pas suivant lequel les porte-récipients sont déplacés à chaque fois.

2. Convoyeur tel que défini dans la revendication 1, dans lequel chacun des porte-récipients comprend une latte comportant des orifices de retenue de récipients et montée entre deux chaînes sans fin.

3. Convoyeur tel que défini dans la revendication 2, dans lequel les lattes de différents types de porte-récipients sont séparées les unes des autres.

4. Convoyeur tel que défini dans la revendication 2, dans lequel les lattes de différents types de porte-récipients de chaque groupe sont solidaires.

5. Convoyeur tel que défini dans la revendication 2, dans lequel il existe au moins trois types de porte-récipients, deux types de lattes au moins parmi les lattes de différents types de porte-récipients de chaque groupe étant solidaires.

6. Convoyeur tel que défini dans la revendication 2, dans lequel les chaînes sont enroulées autour de roues dentées respectives fixées à un arbre d'entraînement, l'arbre d'entraînement étant entraîné par une source d'entraînement par l'intermédiaire d'un embrayage.
